(19) Europäisches Patentamt
European Patent Office
Office européen des brevets

(11) Numéro de publication: **0 403 827 A1**

(12) **DEMANDE DE BREVET EUROPEEN**

(21) Numéro de dépôt: **90110007.3**

(22) Date de dépôt: **26.05.90**

(51) Int. Cl.5: **C08L 23/02, C08L 97/02, C08K 5/54, //(C08L23/02, 97:02,C08K5:54),(C08L97/02, 23:02,C08K5:54)**

(30) Priorité: **07.06.89 FR 8907634**

(43) Date de publication de la demande: **27.12.90 Bulletin 90/52**

(84) Etats contractants désignés: **AT BE CH DE DK ES FR GB GR IT LI LU NL SE**

(71) Demandeur: **SOLVAY & Cie (Société Anonyme)**
**Rue du Prince Albert, 33**
**B-1050 Bruxelles(BE)**

(72) Inventeur: **Dehennau, Claude**
**Chemin des Postes, 236**
**B-1410 Waterloo(BE)**
Inventeur: **Dubois, Paul**
**Rue des Bénédictines (GHI), 29**
**B-7822 ATH(BE)**
Inventeur: **Mulkens, Edmond**
**Avenue de L'Estrée, 70**
**B-1420 Braine-L'Alleaud(BE)**

(74) Mandataire: **Husemann, Claude et al**
**SOLVAY & CIE Département de la Propriété Industrielle 310, Rue de Ransbeek**
**B-1120 Bruxelles(BE)**

(54) **Compcsitions moulables comprenant des polyoléfines et des fibres cellulosiques, procédé pour les fabriquer et objets façonnés à partir de cescompositions.**

(57) Compositions moulables comprenant une polyoléfine, des fibres cellulosiques et un organosilane insaturé présentant un module d'élasticité en traction (E), mesuré à 100° C, supérieur à 1250 MPa et un rapport $G'/G''$ de leur module $G'$, représentatif de leur réponse élastique, à leur module dissipatif $G''$, mesuré à 200° C et à une fréquence de 0,1 rad/sec (0,1 $sec^{-1}$), valant au moins 0,80.

EP 0 403 827 A1

# Compositions moulables comprenant des polyoléfines et des fibres cellulosiques, procédé pour les fabriquer et objets façonnés à partir de ces compositions

La présente invention concerne des compositions moulables comprenant des polyoléfines, des fibres cellulosiques et aussi un agent de couplage à base d'organosilane. Elle concerne également un procédé pour fabriquer ces compositions. Elle concerne encore des objets façonnés à partir de ces compositions.

Il est connu, par la publication EP-A-0008143 (SOLVAY & Cie), de façonner des compositions polyoléfiniques comprenant des polyoléfines modifiées au moyen de monomères polaires et des fibres cellulosiques, lesdites compositions étant soumises à un malaxage opéré à une température supérieure d'au moins 20° C à la température de fusion de la polyoléfine avant d'être mises en forme.

Les propriétés mécaniques des objets façonnés à partir de ces compositions sont bonnes. Leur résistance au choc n'est toutefois pas meilleure que celle conférée par des compositions similaires contenant des polyoléfines non modifiées.

On a décrit par ailleurs le renforcement de polymères thermoplastiques, tels que le polypropylène, par des charges organiques (farine de bois) en faisant usage d'agents de couplage à base d'organosilanes (E.A. Coleman in "Society of Plastics Industry - Technical Proceedings" (SPI/SPE '84), 21-23 juin 1984, pages 284 à 288). La résistance à la traction du polypropylène renforcé par 50 % en poids de farine de bois et contenant 1 % en poids d'un système de couplage binaire à base d'organosilanes insaturés, améliorée à température normale (environ 25° C) (op. cit., page 287, tableau V), devient insuffisante à plus haute température.

Les utilisateurs d'objets façonnés à partir de ces compositions comprenant une polyoléfine et des fibres cellulosiques - notamment l'industrie automobile, pour toutes sortes de pièces d'habillage intérieur des véhicules - souhaitent toutefois que ces objets résistent à la fois à la traction et au choc et, en outre, que la rigidité reste à des niveaux acceptables aux hautes températures auxquelles ces objets peuvent être exposés. Aucune des compositions connues ne répond à ces conditions.

On a maintenant trouvé des compositions permettant de fabriquer des objets conformés présentant un excellent compromis de rigidité à haute température et de résistance au choc. On a aussi trouvé un procédé original pour fabriquer ces compositions.

La présente invention concerne dès lors, à titre principal, des compositions moulables comprenant une polyoléfine, des fibres cellulosiques et un organosilane insaturé présentant un module d'élasticité en traction (E), mesuré à 100° C, supérieur à 1250 MPa.

Le module (E) des compositions moulables selon l'invention est de préférence supérieur à 1300 MPa. Ce module (E) est le plus avantageusement compris entre 1350 et 2100 MPa.

Ce module (E) peut être déterminé par application d'une des normes DIN 53457, IS0 527 ou ASTM D 638.

La mesure de ce module (E) n'est toutefois précise qu'à ± 15 % près. C'est pourquoi les compositions de l'invention sont définies à titre supplétif par le rapport de deux fonctions liées aux fréquences de sollicitation de ces compositions, à savoir leur module $G'$, représentatif de leur réponse élastique (shear storage modulus) et leur module dissipatif $G''$ (shear loss modulus) mesurés sous des fréquences de 0,01 radian (rad) par seconde à 100 radians par seconde. Le rapport $G'/G''$ de ces deux modules mesuré à 0,1 rad par seconde (0,1 $sec.^{-1}$), représentatif des compositions selon l'invention, est au moins 0,80. Les compositions de l'invention ayant les meilleures propriétés sont caractérisées par un rapport $G'/G''$ compris entre 0,85 et 1.

Un rapport $G'/G''$, proche de l'unité est représentatif d'un comportement plus élastique des compositions pour de faibles fréquences de sollicitation.

Dans le cas spécifique des compositions selon l'invention, on constate qu'à l'accroissement du module (E) correspond une augmentation du rapport $G'/G''$.

La signification physique des modules $G'$ et $G''$, les expressions les liant et d'autres précisions à leur sujet peuvent être trouvées dans "Viscoelastic Properties of Polymers" de J.D. Ferry, 2nd edition, John Wiley & Sons, Inc., 1970, notamment pages 12 à 15.

Les modules $G'$ et $G''$ sont évalués à 200° C sur un rhéomètre qui permet de mesurer les propriétés mécaniques dynamiques des polymères de l'état vitreux ou cristallin à l'état fondu. Les mesures en fondu s'effectuent sur des pastilles de 1 à 2 mm d'épaisseur et de 2,5 cm de diamètre prélevées dans des plaques extrudées à partir des compositions selon l'invention.

La mesure consiste à déterminer, sous une fréquence de 0,1 rad par seconde (0,1 $sec^{-1}$), et à une température de 200° C, les modules $G'$ et $G''$.

Les polyoléfines contenues dans les compositions selon l'invention peuvent être n'importe quels

polymères contenant en général, au moins 60 % et, de préférence, au moins 90 % d'unités monomériques dérivées d'oléfines non substituées possédant de 2 à 6 atomes de carbone dans leur molécule. A titre d'exemple, on peut citer le polyéthylène de haute densité, le polypropylène, les copolymères d'éthylène et de propylène, le polybutène-1, le poly-4-méthylpentène-1, les copolymères d'éthylène et de propylène, les copolymères éthylène-acétate de vinyle et les copolymères éthylène-chlorure de vinyle. Les meilleurs résultats sont obtenus avec les polyoléfines cristallines constituées substantiellement d'unités dérivées de propylène (polypropylène).

L'incorporation, dans les compositions, de mélanges de polyoléfines, ne sort pas du cadre de l'invention.

Ces polyoléfines peuvent contenir les divers additifs habituellement ajoutés aux polyoléfines tels que des charges, en particulier minérales, des stabilisants, des lubrifiants, des agents anti-acides, des agents renforçant la résistance aux chocs, des colorants, etc. Ces additifs sont présents de préférence à raison de moins de 10 % en poids de la polyoléfine.

Les fibres cellulosiques contenues dans les compositions selon l'invention peuvent être quelconques et se présenter sous n'importe quelle forme suffisamment divisée. On peut ainsi employer des particules ou des fibres de bois feuillus ou résineux, de la sciure de bois, des déchets de paille, de la pâte à papier et des déchets de papier déchiquetés, des dérivés de la cellulose (méthylcellulose, acétate de cellulose, etc.) pour préparer les mélanges.

On utilise de préférence des fibres cellulosiques se présentant sous forme de particules ayant une dimension moyenne comprise entre 0,1 et 3 mm et ayant une teneur en eau qui ne dépasse pas 15 % en poids et, de préférence, 10 % en poids. Les fibres cellulosiques préférées sont les matières lignocellulosiques produites à partir de bois résineux ou feuillus.

Les quantités de polyoléfines et de fibres cellulosiques présentes dans les compositions selon l'invention ne sont pas critiques. Toutefois, afin d'assurer un moulage correct de ces compositions, on préfère incorporer ces constituants dans les proportions spécifiées ci-après. La teneur en fibres cellulosiques des compositions est déterminée par rapport au poids de polyoléfine. En général, les compositions selon l'invention contiennent 30 à 250 parties en poids de fibres cellulosiques pour 100 parties en poids de polyoléfine, de préférence 70 à 150 parties pour 100 parties. Les meilleurs résultats sont obtenus lorsque les compositions contiennent un poids approximativement égal de polyoléfine et de fibres cellulosiques. Un excès de polyoléfine nuit à l'économie des compositions. Un défaut de polyoléfine nuit à leur cohésion.

Outre la polyoléfine et les fibres cellulosiques, les compositions selon l'invention comprennent aussi un organosilane insaturé.

L'organosilane insaturé est choisi parmi les silanes contenant au moins un groupe hydrolysable lié au silicium et au moins un groupe vinylique insaturé polymérisable également lié au silicium. La présence, d'une part, du groupe hydrolysable réactif vis-à-vis des groupements hydroxyles des fibres cellulosiques et, d'autre part, du groupe vinylique insaturé permettant le greffage du silane sur la polyoléfine, assurent la compatibilisation entre elles des fibres et de la polyoléfine contenues dans les compositions.

Le groupe hydrolysable lié au silicium est généralement choisi parmi les groupes alkoxy et aryloxy et les atomes d'halogène. Le groupe vinylique insaturé est généralement choisi parmi les groupements éthyléniquement insaturés tels que les radicaux vinyle, gamma-méthacryloxypropyle, alkényl gamma-acryloxypropyle, 6-acryloxyhexyltriéthoxy, éthynyle et 2-propynyle par exemple. Les éventuelles valences du silicium non satisfaites par les groupes susmentionnés peuvent l'être par un groupement hydrocarboné monovalent tel que les radicaux méthyle, éthyle, propyle, butyle, pentyle, octyle, cyclohexyle, benzyle, phényle et naphtyle par exemple.

Des exemples d'organosilanes insaturés convenant bien à la réalisation des compositions selon l'invention sont le vinyltriéthoxysilane, le gamma-méthacryloxypropyltriméthoxysilane, le vinyltri(2-méthoxyéthoxy) silane, le vinyltriméthoxysilane, le vinyltrichlorosilane, le gamma-méthacryloxypropyltri(2-méthoxyéthoxy)silane, le gamma-acryloxypropyltriéthoxysilane, le vinyltriacétoxysilane, l'éthynyltriéthoxysilane et le 2-propynyltrichlorosilane.

Des organosilanes insaturés tout particulièrement préférés sont le vinyltriéthoxysilane et le gamma-méthacryloxypropyltriméthoxysilane.

Selon un mode de réalisation préféré de l'invention, l'organosilane défini ci-dessus peut être utilisé conjointement avec au moins un des composés mentionnés ci-après pour constituer un système de couplage encore plus performant entre la polyoléfine et les fibres cellulosiques.

L'organosilane peut être combiné avec un composé organique contenant au moins deux groupes insaturés polymérisables. Ce composé à fonctionnalités multiples, appelé ci-après plus simplement "composé organique", permet la création d'une phase réticulée entre la polyoléfine et les fibres cellulosiques améliorant les propriétés mécaniques, la résistance aux agents chimiques et la résistance au

vieillissement des compositions selon l'invention.

A titre de composés organiques utilisables selon l'invention, on peut citer le diacrylate de 1,4-butylène glycol, le diméthacrylate de diéthylène glycol, le mellitate de triallyle, le triacrylate de pentaérythritol, le pentaacrylate de dipentaérythritol, le (tri)maléate de triméthylolpropane, le N,N-tétraacryloyl 1,6-diaminopyridine, le diméthacrylate de 1,3-butylène glycol, le diméthacrylate d'éthylène glycol, le diacrylate d'éthylène glycol, le diacrylate de diéthylène glycol, le diacrylate de triéthylène glycol, le diméthacrylate de polyéthylène glycol, le diacrylate de polyéthylène glycol, le triméthacrylate de triméthylol propane, le triacrylate de triméthylol propane, le divinyl sulfone, le dicyclopentadiène, le dicarbonate de bisalkyl glycol, le cyanurate de triallyle, le citrate d'acétyl triallyle, le divinylbenzène, le phtalate de dialkyle, le tétraallyl méthylènediamine, le tétraallyl oxyéthane, le 3-méthyl-1,4,6-heptatriène, le diméthacrylate de 1-10-décaméthylène glycol et les di-, tri-, tétra-, penta-acrylates d'alcool polyvinylique.

Des composés organiques préférés sont ceux présentant un rapport du taux d'insaturation au poids moléculaire élevé, tout particulièrement les tri-, tétra- et penta-acrylates d'alcool polyvinylique et les autres tri-, tétra- et penta-acrylates et méthacrylates de polyols, tels que les pentaérythritol, méthylolpropane et dipentaérythritol.

L'organosilane peut également être combiné avec un tensioactif siliconé choisi parmi les polysiloxanes dont la molécule contient au moins un groupe alkyle en $C_{1-12}$ lié au silicium et les composés polyoxyalkyléniques ayant au moins un bloc polyoxyalkylénique lié par une extrémité à un bloc siloxane, à un groupe alkyle en $C_{1-12}$ ou à un groupe alkényle et lié par l'autre extrémité à un groupe alkoxy, un bloc siloxane ou un groupe hydroxyle. Une classe particulière de ces composés polyoxyalkyléniques est constituée par les copolymères à blocs polysiloxane-polyoxy alkylène que l'on peut représenter par la formule :

$$R_3SiO[R_2SiO]_a\ [R'\underset{\underset{(C_mH_{2m}O)_nR'}{|}}{Si}O]_b\ SiR_3$$

dans laquelle :

- R est un radical hydrocarboné monovalent en $C_{1-12}$, de préference le radical méthyle;
- R′ est un radical hydrocarboné monovalent en $C_{1-18}$ ou un radical alkanoyle en $C_{1-18}$, de préférence aussi le radical méthyle;
- a est un nombre tel que a ≧ 1, de préference 1 ≦ a 100;
- b est un nombre tel que b ≧ 1, de préférence 1 ≦ b 100;
- m est un nombre tel que m ≧ 2, de préference valant 2 ou 3;
- n est un nombre tel que n ≧ 2, de préférence 2 ≦ n ≦ 40.

Enfin, le système de couplage à base d'organosilane insaturé contenant éventuellement le composé organique et/ou le tensio-actif siliconé définis ci-dessus peut contenir un composé générateur de radicaux libres. On préfère choisir ce composé parmi ceux ayant une durée de demi-vie inférieure à 30 minutes à 130 °C. Des composés générateurs de radicaux libres préférés sont les composés peroxydés tels que le peroxyde de dicumyle, le peroxyde de benzoyle, le perbenzoate de tert-butyle, le peroxyde de di-tert-butyle, le 2,5-diméthyl-2,5-di(tert-butylperoxy)hexane, le 2,5-diméthyl-2,5-di(tert-butylperoxy)hexyne, l'hydroperoxyde de tert-butyle, l'alpha-alpha'-di-(tert-butylperoxy)di-isopropylbenzène et le percarbonate d'isopropyle.

L'organosilane insaturé est présent dans les compositions selon l'invention en quantité propre à assurer une compatibilisation efficace entre la polyoléfine et les fibres cellulosiques. Généralement, cette quantité est comprise entre 0,05 et 10 % en poids par rapport au poids de fibres cellulosiques, de préférence entre 0,1 et 5 % en poids.

Les quantités d'éventuels composé organique et tensio-actif siliconé avec lesquels l'organosilane peut être combiné pour constituer le système de couplage préféré selon l'invention, exprimées en % en poids, par rapport au poids de fibres cellulosiques présentes dans la composition, sont généralement aussi comprises entre 0,05 et 10 % en poids, de préférence respectivement entre 0,1 et 5 % en poids et entre 0,1 et 2,5 % en poids.

De très bons résultats ont été enregistrés avec des systèmes de couplage comprenant l'organosilane, le composé organique et le tensio-actif siliconé dans des rapports pondéraux respectifs compris entre 1-5/1-5/0,3-1,5, l'ensemble des trois ingrédients étant présents dans la composition à raison d'environ 0,2 à 3 % en poids.

Quant à l'éventuel composé générateur de radicaux libres, il est présent en quantités conventionnelles, généralement comprises entre 0,005 et 5 % en poids de fibres cellulosiques présentes dans les compositions, de préférence entre 0,05 et 2,5 % en poids. Ce composé peut, par commodité, être dispersé sur un support inorganique, tel qu'un sel métallique, comme le carbonate de calcium par exemple. Le composé peroxydé (supporté) constitue de préférence d'environ 10 à environ 100 % en poids du poids des autres constituants du système de couplage.

D'autres détails relatifs aux organosilanes insaturés, aux éventuels composés organiques, tensio-actifs siliconés et composés générateurs de radicaux libres pouvant constituer les systèmes de couplage décrits plus haut, peuvent être trouvés dans le brevet US-A-4481322 (BON CARBIDE CORPORATION) dont le contenu est incorporé par référence dans la présente description.

Ces systèmes de couplage sont commercialisés par UNION CARBIDE sous les dénominations UCARSIL PC-1 A et PC-1 B.

Outre la polyoléfine, les fibres cellulosiques, l'organosilane insaturé et les éventuels autres ingrédients constituant le système de couplage décrit plus haut, les compositions selon l'invention peuvent bien entendu contenir d'autres matériaux compatibles avec ces constituants, tels que des fibres non cellulosiques et des élastomères synthétiques renforçants par exemple; elles peuvent aussi contenir les additifs usuels de mise en oeuvre des polymères thermoplastiques, tels que des lubrifiants, des stabilisants, des pigments, etc. On préfère toutefois que les compositions contiennent au moins 80 % en poids de poly oléfines et de fibres cellulosiques, et de préférence au moins 90 % en poids.

La présente invention concerne aussi, dans un autre de ses aspects, un procédé pour fabriquer les compositions moulables décrites plus haut. Ce procédé consiste à malaxer un mélange fondu obtenu en incorporant les fibres cellulosiques à la polyoléfine préalablement fondue contenant l'organosilane insaturé et les autres éventuels ingrédients du système de couplage.

L'addition et l'incorporation les uns aux autres des constituants du mélange peuvent être réalisées par tout moyen, connu à cet effet, compatible avec leur état physique. L'organosilane insaturé, notamment, peut se présenter sous forme solide ou sous forme liquide et peut être distribué dans la polyoléfine, elle-même sous forme solide ou fondue, par tout dispositif convenable assurant l'incorporation d'une petite quantité d'un liquide ou d'un solide dans une plus grande quantité d'un autre solide éventuellement fondu.

Il est essentiel, pour obtenir des compositions ayant les propriétés caractéristiques de celles de l'invention, d'incorporer les fibres cellulosiques à la polyoléfine après l'incorporation préalable de l'organosilane insaturé dans cette dernière. Pour le reste, les quantités respectives des divers constituants à mélanger ont été précisées plus haut.

Le malaxage peut être réalisé par tout moyen connu à cet effet. Ainsi, on peut travailler indifféremment en malaxeurs du type externe ou du type interne. Pour des raisons techniques, écologiques et économiques, on préfère cependant travailler dans des malaxeurs du type interne et plus précisément dans des extrudeuses qui constituent une classe particulière de malaxeurs internes. Les extrudeuses à vis corotatives sont tout particulièrement préférées.

Le malaxage peut être effectué dans les conditions habituelles de façonnage des objets en polyoléfines bien connues de l'homme du métier.

La température maximale applicable au cours du malaxage n'est pas critique en elle-même et est limitée en pratique par la nature et les températures de décomposition des constituants de la composition polyoléfinique. Généralement, on travaille à des températures ne dépassant pas 250° C, de préférence à des températures ne dépassant pas 220° C environ.

La durée du malaxage à température élevée est choisie en tenant compte de la nature de la polyoléfine et des fibres cellulosiques et de la température appliquée. Cette durée est généralement comprise entre 5 secondes et 30 minutes et le plus souvent entre 10 secondes et 15 minutes. On préfère travailler pendant des durées situées entre 30 secondes et 10 minutes.

Après leur malaxage, les compositions se trouvent sous une forme pâteuse et sont moulables selon les techniques traditionnelles de moulage des matières plastiques, telles que l'extrusion, l'injection, le pressage ou le calandrage. Elles sont donc, avantageusement, mises en forme directement, soit sous leur forme définitive, un profilé par exemple, soit sous forme semi-finie, une plaque par exemple. Ces objets, façonnés à partir de ces compositions, constituent également un des aspects de l'invention.

Les objets façonnés ainsi obtenus peuvent être utilisés dans de nombreuses applications. Une application particulièrement avantageuse est la fabrication, par extrusion au moyen d'une filière plate ou par calandrage, de plaques. Ces plaques peuvent être ultérieurement mises en forme, directement ou après stockage, soit sous pression dans des moules froids ou chauffés, soit par thermoformage sous dépression, dans ce dernier cas éventuellement après avoir été revêtues d'une feuille décorative adéquate, pour fabriquer des objets tels que des panneaux intérieurs de revêtements de parties d'automobiles (portes, coffres, etc.).

L'invention est explicitée par les exemples de réalisation dont la description suit.

Exemple 1

Une extrudeuse CLEXTRAL BC 45 à double vis corotative dont la température du fourreau est de 200° C et la température de la filière de 220° C est alimentée :

(a) via la trémie, par de la poudre de polypropylène (PP) commercialisé sous la dénomination ELTEX P HL 402, additionnée d'un système de couplage commercialisé sous les dénominations UCARSIL PC-1A (Y-9777) et PC-1B (Y-9771) par UNION CARBIDE.

(b) via le quatrième module de l'extrudeuse - c'est-à-dire à un endroit de l'extrudeuse où le PP est fondu - par de la sciure de bois de hêtre chauffée ou séchée.

Le PP, la sciure et le système de couplage sont introduits en quantités propres à l'obtention d'une composition extrudée comprenant 54 % en poids de PP, 45 % de sciure et 1 % du système de couplage.

Cette composition sort de l'extrudeuse au travers d'une filière plate sous forme d'une feuille qui est lissée ensuite entre les cylindres d'une calandre lisseuse chaude. Les propriétés principales de la feuille obtenue sont rassemblées au Tableau I ci-après.

Exemple 2 (de comparaison)

On répète l'essai de l'exemple 1 en alimentant l'extrudeuse, via la trémie, par la sciure de bois et, via une extrudeuse satellite alimentant le quatrième module, par le PP additionné du système de couplage.

Les propriétés de la feuille obtenue sont rassemblées au Tableau I.

Exemple 3 (de comparaison)

On répète l'essai de l'exemple 1 en alimentant l'extrudeuse, via la trémie, par tous les ingrédients de la composition, mélangés préalablement à froid dans un mélangeur-homogénéiseur.

Les propriétés de la feuille obtenue sont rassemblées au Tableau I.

Exemple 4 (de comparaison)

On répète l'essai de l'exemple 1 sauf que l'on alimente l'extrudeuse, via la trémie, par du PP ayant été modifié par le système de couplage au cours d'un passage préalable sans sciure de bois dans la même extrudeuse suivi d'un broyage.

Les propriétés de la feuille obtenue sont rassemblées au Tableau I.

Exemple 5 (de comparaison)

Pour reproduire le procédé consistant à extruder du PP "compoundé" avec 50 % en poids de farine de bois en présence de 1 % en poids total du système de couplage (E.A. Coleman, "Reinforcement of Polymer with filler" in "Society of Plastics Industry - Technical Proceedings" (SPI/SPE '84), 21-23 juin 1984, page 285, colonne de gauche), on réintroduit dans la trémie de l'extrudeuse de l'exemple 1 le produit résultant du broyage de l'extrudat obtenu selon cet exemple.

Les propriétés de la feuille obtenue après ce second passage dans l'extrudeuse sont rassemblées au Tableau I.

Tableau I

| | EXEMPLES | | | | |
|---|---|---|---|---|---|
| | 1 | 2 | 3 | 4 | 5 |
| | selon l'invention | de comparaison | | | |
| Module (E) mesuré à 23° C (MPa) | 5170 | 4915 | 4530 | 4120 | 4430 |
| 100° C (MPa) (norme DIN 53457) | 1450 | 1180 | 1010 | 1250 | 1090 |
| Résistance au choc (éprouvette non entaillée) (norme DIN 53453) ($kJ/m^2$) | 6,3 | 7,9 | 8,5 | 6,5 | 9,9 |
| Rapport G′/G″ à 200° C et à 0,1 rad/sec (0,1 $sec^{-1}$) | 0,95 | 0,56 | 0,47 | 0,79 | 0,64 |

Ces résultats montrent que seul le procédé de l'invention permet d'obtenir des compositions présentant un compromis optimal de rigidité (module (E)) à haute température et de résistance au choc, combiné avec un rapport des modules G′/G″ élevé.

**Revendications**

1 - Compositions moulables comprenant une polyoléfine, des fibres cellulosiques et un organosilane insaturé, caractérisées par un module d'élasticité en traction (E), mesuré à 100° C, supérieur à 1250 MPa.

2 - Compositions moulables comprenant une polyoléfine, des fibres cellulosiques et un organosilane insaturé, caractérisées par un rapport G′/G″ de leur module G′, représentatif de leur réponse élastique, à leur module dissipatif G″, mesuré à 200° C et à 0,1 $sec^{-1}$, valant au moins 0,80.

3 - Compositions selon la revendication 2, caractérisées par un rapport G′/G″ compris entre 0,85 et 1.

4 - Compositions selon l'une quelconque des revendications 1 à 3, caractérisées en ce que l'organosilane insaturé contient au moins un groupe hydrolysable et au moins un groupe vinylique insaturé polymérisable liés au silicium.

5 - Compositions selon l'une quelconque des revendications 1 à 4, caractérisées en ce que l'organosilane insaturé est combiné avec un composé organique contenant au moins deux groupes insaturés polymérisables.

6 - Compositions selon l'une quelconque des revendications 1 à 5, caractérisées en ce que l'organosilane insaturé est combiné avec un tensio-actif siliconé.

7 - Compositions selon l'une quelconque des revendications 1 à 6, caractérisées en ce que l'organosilane est combiné avec un composé générateur de radicaux libres.

8 - Compositions selon l'une quelconque des revendications 1 à 7, caractérisées en ce qu'elles contiennent 30 à 250 parties en poids de fibres cellulosiques pour 100 parties en poids de polyoléfine.

9 - Compositions selon l'une quelconque des revendications 1 à 8, caractérisées en ce qu'elles contiennent entre 0,05 et 10 % en poids d'organosilane insaturé par rapport au poids de fibres cellulosiques.

10 - Compositions selon l'une quelconque des revendications 1 à 9, caractérisées en ce qu'elles contiennent :
- entre 0,05 et 10 % en poids, par rapport au poids de fibres cellulosiques, d'un composé organique contenant au moins deux groupes insaturés polymérisables,
- entre 0,05 et 10 % en poids d'un tensio-actif siliconé et
- entre 0,005 et 5 % en poids d'un composé générateur de radicaux libres.

11 - Procédé pour fabriquer des compositions moulables comprenant une polyoléfine, des fibres cellulosiques et un organosilane insaturé, caractérisé en ce qu'on malaxe un mélange fondu obtenu en incorporant les fibres cellulosiques à la polyoléfine préalablement fondue contenant l'organosilane insaturé.

12 - Procédé selon la revendication 11 caractérisé en ce que le mélange fondu est mis en forme directement.

13 - Objets façonnés à partir des compositions moulables selon l'une quelconque des revendications 1

à 10.

Office européen des brevets

# RAPPORT DE RECHERCHE EUROPEENNE

Numero de la demande

EP 90 11 0007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 717 742 (A.D. BESHAY)<br>* Document entier *<br>--- | 1-13 | C 08 L 23/02<br>C 08 L 97/02<br>C 08 K 5/54 //<br>(C 08 L 23/02<br>C 08 L 97:02<br>C 08 K 5:54 )<br>(C 08 L 97/02<br>C 08 L 23:02<br>C 08 K 5:54 ) |
| X | GB-A-2 203 743 (BOHUSLAV VACLAV KOKTA)<br>* Page 5, ligne 19 - page 6, ligne 42 *<br>----- | 1-13 | |

DOMAINES TECHNIQUES RECHERCHES (Int. Cl.5)

C 08 L
C 08 K

Le présent rapport a été établi pour toutes les revendications

| Lieu de la recherche | Date d'achèvement de la recherche | Examinateur |
|---|---|---|
| LA HAYE | 22-10-1990 | GOOVAERTS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)